# EUROPÄISCHE PATENTSCHRIFT

(11) **EP 1 056 046 B1**
(45) Veröffentlichungstag und Bekanntmachung des Hinweises auf die Patenterteilung: **28.04.2004**
(21) Anmeldenummer: 00100963.8
(22) Anmeldetag: 19.01.2000
(51) Int. Cl.: G06T 7/00

(54) **Verfahren zur Bearbeitung eines Röntgenbildes**
Radiographic image processing method
Procédé de traitement d'images radiographiques

(30) Priorität: 14.04.1999 DE 19916664
(43) Veröffentlichungstag der Anmeldung: 29.11.2000
(73) Patentinhaber: Smiths Heimann GmbH, 65205 Wiesbaden (DE)
(72) Erfinder: Beneke, Knut, 55270 Ober-Olm (DE)
(74) Vertreter: Dietrich, Barbara

(56) Entgegenhaltungen:
- US-A- 5 212 637
- US-A- 5 544 256
- US-A- 5 807 256
- H. BRÜNING, S. WOLFF: "Automated Explosive Detection Systems Based Upon CT Technology" PROCEEDINGS OF THE 32ND ANNUAL INTERNATIONAL CARNAHAN CONFERENCE ON SECURITY TECHNOLOGY 1998, 12. - 14. Oktober 1998, Seiten 55-58, XP002239013

## Beschreibung

Die Erfindung betrifft ein Verfahren zur Bearbeitung eines Röntgenbildes nach dem Oberbegriff des Patentanspruchs 1.

Um dem Betrachter eines Röntgenbildes die Auswertung von durchleuchteten Objekten zu erleichtern, wird das Röntgenbild anhand von unterschiedlichen Eigenschaften im Röntgensystem selbständig untersucht Dabei sucht eine Software nach bestimmten, vorher definierten Gegenständen, wie beispielsweise Schußwaffen, Stichwaffen, Sprengstoff in dem durchleuchteten Objekt.

Ein solches Verfahren wird in H. Brüning, S. Wolff : "Automated Explosive Detection System Based upon CT Technology", Proc. 32 nd Annual Int. conf. on Security Technology, 1998, pp. 55-58 und in der unveröffentlichten DE-198 55 250.5 offenbart. Wird ein solcher Gegenstand ermittelt, wird dem Betrachter mitgeteilt, daß dieser den Gegenstand im durchleuchteten Objekt genauer untersuchen muß. Diese Mitteilung erfolgt durch Markierung des gefundenen Gegenstandes auf dem Monitor, beispielsweise durch das Setzen eines Kreises, eines Rahmens o.ä.. Da diese detektierten Gegenstände nicht als ein Ganzes erkannt werden, wird um jeden detektierten Gegenstand eine Markierung gesetzt, wodurch die Auswertung durch den Betrachter dann erschwert wird, wenn diese in mehrfacher Anzahl auf dem Monitor sichtbar gemacht werden. Dieses ist bei einer Durchlaufzeit von ca. 6 Sekunden von großem Nachteil für den Betrachter.

Hieraus ergibt sich nun die Aufgabe, ein Verfahren zur Bearbeitung eines Röntgenbildes aufzuzeigen, daß die gesetzten Markierungen optimiert, um dem Betrachter die Auswertung eines Röntgenbildes zu erleichtern.

Gelöst wird die Aufgabe durch die Merkmale des Patentanspruchs 1.

Dabei liegt der Erfindung die Idee zugrunde, die vielen sichtbaren Markierungen miteinander automatisch zu verbinden, so daß am Monitor nur eine Markierung als Summe der einzelnen Markierungen dargestellt wird, wodurch dem Betrachter eine zentrale Markierung für eine schnelle und sichere Auswertung über den Gegenstand im Objekt gegeben wird. Das Verbinden der Markierungen erfolgt durch eine im Röntgensystem abgelegte Funktion, die passende Markierungen zusammenfaßt und eine Gesamtmarkierung in das Röntgenbild setzt. Nur zueinander gehörende Markierungen werden dabei zusammengefaßt. Die Zugehörigkeit ergibt sich aus der räumlichen Nähe zweier Markierungen und deren Überschneidungen.

Vorteilhafte Ausführungen sind in den Unteransprüchen enthalten.

So können eingefügte Markierungen auch wieder entfernt werden, beispielsweise dann, wenn der Bediener die Markierungen einzeln angezeigt haben möchte. Auch ist der Grad der Zusammenfassung der Markierungen einstellbar. Dadurch kann erreicht werden, daß die Markierungen unverändert dargestellt oder immer zusammengefaßt werden. Ebenfalls sind Zwischenabstufungen möglich, wobei dann maximal 2, 3, 4, 5 usw. Markierungen miteinander verbunden werden, so daß auf dem Monitor zwei bis drei Markierungen usw. als Einzelsummenmarkierungen sichtbar gemacht werden.

Anhand eines Ausführungsbeispieles mit Zeichnung soll die Erfindung näher erläutert werden.

Es zeigt:
- Figur 1: Ein vereinfacht dargestelltes Röntgensystem;
- Figur 2: Eine blockbildartige Darstellung eines Rechnersystems im Röntgensystem;
- Figur 3: Eine visuelle Darstellung des Verfahrensablaufs zum Setzen einer gemeinsamen Markierung am Monitor;
- Figur 4: Eine weitere visuelle Darstellung des Verfahrens zum Entfernen der gemeinsamen Markierung am Monitor.

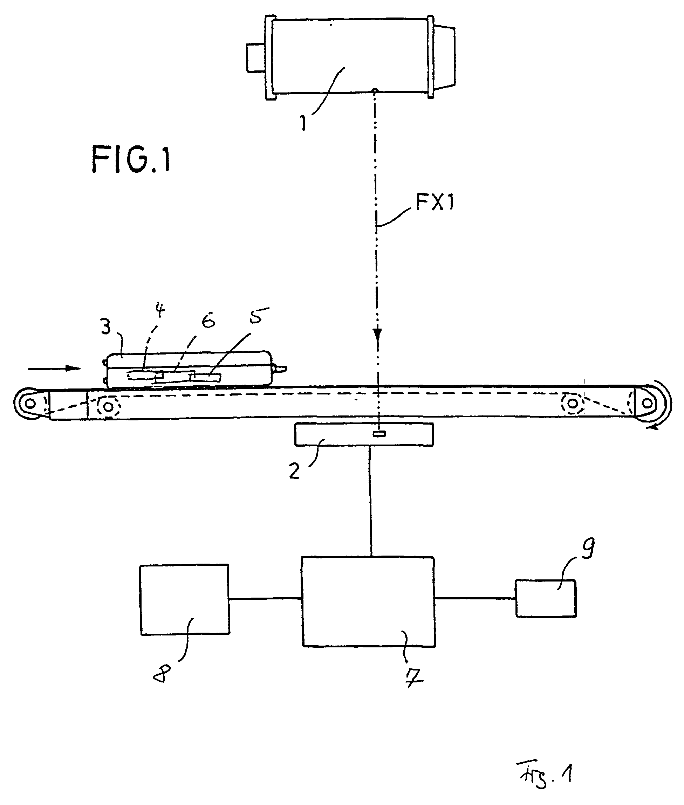

In Figur 1 ist ein Röntgensystem mit einem herkömmlichen Röntgenstrahlungserzeuger 1 und mit einer Detektorvorrichtung 2 in vereinfachter Form aufgezeigt. Zwischen der Detektorvorrichtung 2 und dem Röntgenstrahlungserzeuger 1 befindet sich ein zu bestimmendes Objekt 3. Dieses Objekt 3 kann ein Koffer sein, in dem verschiedene Gegenstände 4, 5, 6 angeordnet sind. Mit der Detektorvorrichtung 2 ist über bekannte Komponenten (hier nicht dargestellt) ein Rechnersystem 7 verbunden. Über ein Anzeigegerät, beispielsweise ein Monitor 8 bzw. ein Drucker 9, die mit dem Rechnersystem 7 verbunden sind, werden die Meßergebnisse visualisiert.

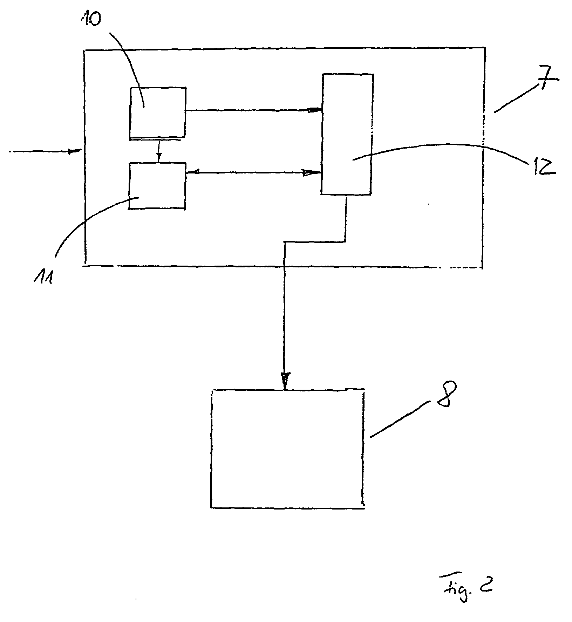

In Figur 2 sind die wesentlichen Baugruppen des Rechnersystems 7 für den Ablauf des Verfahrens dargestellt. Dabei ist der Ausgang der Detektorvorrichtung 2 (nicht näher dargestellt) auf eine Bildverarbeitungseinrichtung 10 geführt, die mit einem Markierungsspeicher 11 und einem Speicher 12 für Markierungslisten verschaltet ist. Der Markierungsspeicher 11 greift bidirektional auf den Speicher 12 zu und somit auf die während des Verfahrens aufgebaute Markierungsliste. Gleichzeitig weist der Markierungsspeicher 11 einen Submarkierungsspeicher 11.1 auf (wird noch ausgeführt).

Das Verfahren läuft wie folgt ab.
Vom Röntgenstrahlungserzeuger 1 wird eine Röntgenstrahlung als Röntgenstrahlbündel FX1 auf das zu durchleuchtende Objekt 3 gebracht. Diese Röntgenstrahlung FX1 wird durch das jeweilige Absorptionsverhalten der Gegenstände 4, 5, 6 im Objekt 3 sowie durch das Gehäusematerial des Objektes 3 abgeschwächt und von der Detektorvorrichtung 2 aufgenommen. Die Detektorvorrichtung 2, beispielsweise eine Zeilenkamera, bestehend aus mehreren Röntgendetektoren, liefert aus den nicht absorbierten Röntgenstrahlen Signale, die als Bilddateninformation über das durchleuchtete Objekt 3 für die Bildverarbeitung in das Rechnersystems 7 eingespeist werden. Diese Einspeistung erfolgt vorzugsweise zeilenweise und kontinuierlich. Die Bilddaten werden in bekannter Art und Weise in der Bildbearbeitungseinrichtung 10 ausgewertet und für eine Monitordarstellung aufbereitet, wobei sich ein so dargestelltes Röntgenbild aus Bildpunkten mit verschiedenen Eigenschaften, beispielsweise Grauwert und Materialwert zusammensetzt, aus denen der Gegenstand 4, 5, 6 ermittelt werden kann.

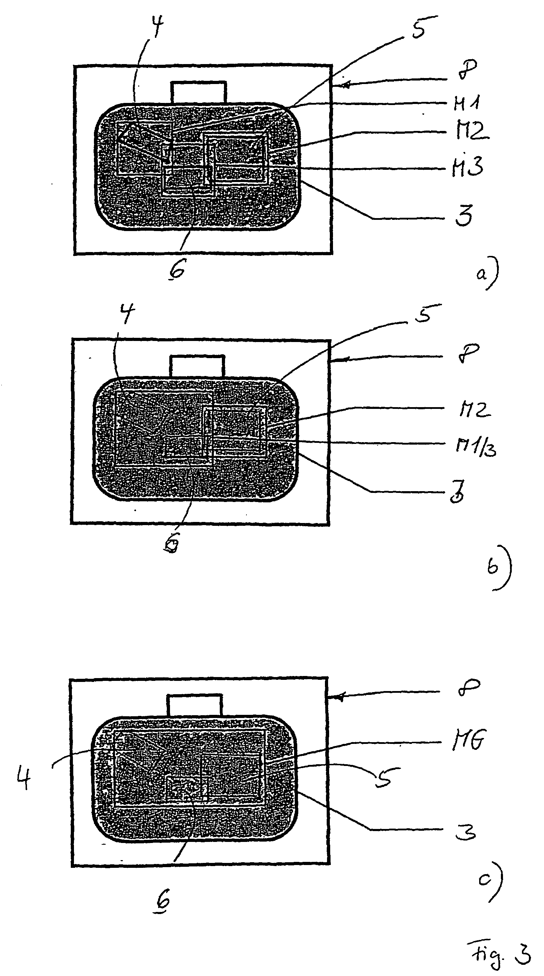

Bei Detektierung von gefährtlich definierten Gegenständen 4, 5, 6 wird prinzipiell um jeden dieser Gegenstände 4, 5, 6 automatisch eine eigene Markierung M1, M2, M3 gesetzt (vgl.Figur 3). Dabei wird um den zuerst erkannten Gegenstand 4 die Markierung M1 und um den als zweiten erkannten Gegenstand 5 eine Markierung M2 gesetzt. Bereits hierbei werden beide Markierungen M1, M2 miteinander verglichen, wobei beide Markierungen M1 und M2 durch eine Funktion beurteilt werden, ob beide Markierungen M1 und M2 zueinander passen, wozu die zueinander passenden bzw. zueinander weisenden Seiten der Markierung M1 und der Markierung M2 mittels Koordinatenvergleich verglichen werden. Je größer diese Seiten in Lage und Länge übereinstimmen, desto besser passen sie zusammen. Dabei darf die Entfernung zwischen der Markierung M1 und der Markierung M2 einen voreingestellten variablen Grenzwert nicht überschreiten.

Im vorliegenden Ausführungsbeispiel liegen die Markierungen M1 und M2 zu weit auseinander, so daß keine gemeinsame Markierung gesetzt wird. Beide Markierungen M1 und M2 werden in den Speicher 12 sowie in den Submarkierungsspeicher 11.1 des Markierungsspeicher 11 eingeschrieben.

Annähernd zeitgleich erfolgt die Detektion des Gegenstandes 6 und das Setzen der Markierung M3 um diesen Gegenstand 6. In einem weiteren Schritt wird nun diese Markierung M3 mit der Markierung M1 verglichen, d.h. bestimmt, ob beide Markierungen M1 und M3 zueinander passen. Da die beiden Markierungen M1 und M3 in den passenden Seiten sich schneiden, wird zusätzlich zur Übereinstimmung der zueinander passenden Seiten das Verhältnis der gemeinsamen (sich überlappenden) Fläche beider Markierungen M1 und M3 (Schnittmenge) zur Fläche der kleineren der beiden Markierungen M1 und M3 ermittelt. Je größer dieses Verhältnis ist, desto besser passen beide Markierungen M1 und M3 zusammen. Wie in Figur 3b dargestellt, werden die Markierungen M1 und M3 durch eine neue Markierung als Einzelsummenmarkierung M1/3 ersetzt, wobei die jeweils äußeren Seiten der Markierungen M1 bzw. M3 die Größe der neuen Einzelsummenmarkierung M1/3 ergeben. Damit diese Markierungen M1 und M3 im Rechnersystem nicht verloren gehen, werden diese als Submarkierung M1 und M3 im Submarkierungsspeicher 11.1 als Submarkierungen M1 und M3 der Einzelsummenmarkierung M1/3 gespeichert.

Etwa zeitgleich wird die neue Einzelsummenmarkierung M1/3 mit der Markierung M2 aus der Markierungsliste auf Übereinstimmung verglichen. Als Ergebnis dieses Vergleichs wird eine neue Markierung Mg als Endsummenmarkierung auf den Monitor 8 gegeben, wobei sich unter der Endsummenmarkierung Mg die Gegenstände 4, 5, 6 befinden (vgl. Figur 3c). Die Markierung M2 und die Einzelsummenmarkierung M1/3 werden Submarkierungen der Endsummenmarkierung Mg. Für den Betrachter (nicht näher dargestellt) ergibt sich somit ein übersichtliches Röntgenbild auf dem Monitor 8, auf dem in vorteilhafter Art nur eine Endsummenmarkierung Mg angezeigt ist, ohne daß Zuordnungen zwischen den einzelnen Markierungen M1, M2, M3 und der Darstellung auf dem Monitor 8 dargestellten Endsummenmarkierung Mg verlorengehen.

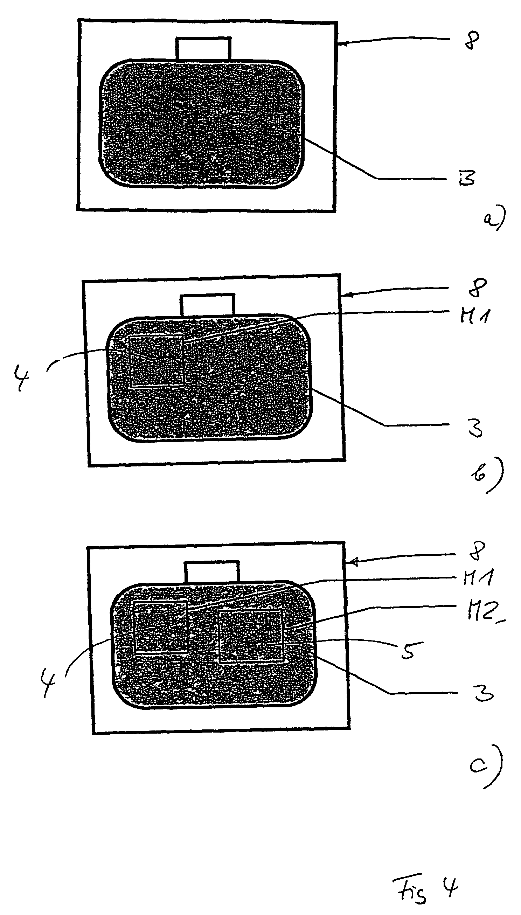

Die Informationen über die einzelnen Markierungen M1, M2, M3 sowie deren Zuordnung als Submarkierungen in Bezug auf die Einzelsummenmarkierung M1/3 und Endsummenmarkierung Mg verbleiben im Rechnersystem 7 im Speicher 12 sowie dem Submarkierungsspeicher 11.1. So ist es möglich, beim Löschen der Endsummenmarkierung Mg alle zu dieser Summe gehörenden Submarkierungen M1 und M3 der Einzelsummenmarkierung M1/3 sowie die Submarkierung M2 wieder separat darzustellen. Dazu wird die Endsummenmarkierung Mg beispielsweise per Knopfdruck vom Bediener/Betrachter vom Monitor 8 entfernt, wodurch das Rechnersystem 7 die einzeln gespeicherten Markierungen M1, M2 (M3 hier nicht näher dargestellt), auf dem Monitor 8 wieder sichtbar gemacht werden (siehe Figur 4a bis 4c).

Diese notwendigen Informationen werden dem Submarkierungsspeicher 11.1 sowie der Markierungsliste im Speicher 12 schrittweise entnommen. Das Rechnersystem 7 arbeitet dabei die vorher beschriebenen Schrittabläufe rückwärts wieder ab. Zuerst wird festgestellt, welche Endsummenmarkierung Mg entfernt worden ist und im Submarkierungspeicher 11.1 nach den einzelnen zugehörigen Submarkierungen gesucht. Dabei werden die zu der Endsummenmarkierung Mg zugehörige Submarkierung M1/3 sowie die Submarkierung M2 gefunden. Die Endsummenmarkierung Mg wird in der Markierungsliste gelöscht und die im Submarkierungsspeicher 11.1 aufgefundene Submarkierung M1/3 sowie die Submarkierung M2 in die Markierungsliste des Speichers 12 eingetragen. Durch die Software des Rechnersystems 7 wird weiterhin erkannt, daß die Submarkierung M1/3 als Einzelsummenmarkierung sich aus weiteren Markierungen M1 und M3 zusammensetzt, während die Submarkierung M2 keine weiteren Submarkierungen besitzt und somit eine Einzelmarkierung darstellt. Es wird in der Markierungsliste die Einzelsummenmarkierung M1/3 gelöscht und diese durch die Submarkierungen M1 und M3 ersetzt, die aus dem Submarkierungsspeicher 11.1 in den Speicher 12 eingelesen werden. Die einzelnen Markierungen M1, M2 und M3 werden aus der Markierungsliste heraus auf den Monitor 8 gegeben und dargestellt. Dadurch kann der Bediener selber entscheiden, ob er die gemeinsame Markierung Mg oder die Sub-/Einzelmarkierungen M1/3, M2 oder nur die Einzelmarkierungen M1, M2, M3 usw. angezeigt haben möchte.

Es versteht sich von selbst, daß bei Detektion von mehreren Gegenständen, d.h. mehr als diesen drei Gegenständen 4, 5, 6 in diesem Aussführungsbeispiel die gesetzten Markierungen M1, M2, M3 usw. solange miteinander verglichen werden, bis keine zueinanderpassenden Markierungen (einzelne Summenmarkierungen) gefunden wurden.

Im Rahmen des Erfindungsgedankens sind jedoch auch Varianten möglich. So kann der Grad der Zusammenfassung der Markierung eingestellt werden. Mit dieser Einstellung kann erreicht werden, daß Markierungen nicht immer oder nur teilweise zusammengefaßt werden, d.h. es sind auch Zwischenabstufungen bezüglich des Zusammenfassungsgrades möglich. Dadurch können auch aus zusammengefaßten Markierungen einzelne Markierungen entfernt werden, wobei diese dann in mehrere Teile zerfallen.

### Bezugszeichenliste

- 1: Röntgenstrahlungserzeuger
- 2: Detektorvorrichtung
- 3: Objekt
- 4: Gegenstand
- 5: Gegenstand
- 6: Gegenstand
- 7: Rechnersystem
- 8: Monitor
- 9: Drucker
- 10: Bildverarbeitungseinrichtung
- 11: Markierungsspeicher
- 11.1: Submarkierungsspeicher
- 12: Speicher
- M1 - M3: Markierungen/Submarkierungen
- M 1/3: Einzelsummenmarkierung/Submarkierung
- Mg: Endsummenmarkierung

## Patentansprüche

1. Verfahren zur Bearbeitung eines Röntgenbildes, in dem Gegenstände in einem durchleuchteten Objekt für einen Bediener auf einem Monitor sichtbar gemacht werden, wobei um bestimmte, vorher definierte Gegenstände Markierungen gesetzt werden, **dadurch gekennzeichnet, dass** Markierungen (M1, M2, M3 ...) dann schrittweise zu einer neuen Markierung (M) automatisch zusammengefaßt werden, wenn mindestens zwei Markierungen (M1, M2, M3...) zueinander passen, wobei über eine Funktion die Übereinstimmung der zueinander passenden Seiten der Markierungen (M1, M2, M3...) sowie das Verhältnis der gemeinsamen Fläche der passenden Markierungen (M1, M2, M3...) zur Fläche der Kleineren der beiden Markierungen geprüft wird, wodurch eine höhere Übersichtlichkeit durch Bildung einer Endsummenmarkierung (Mg) innerhalb des Röntgenbildes auf dem Monitor (8) geschaffen wird.

2. Verfahren nach Anspruch 1, **dadurch gekennzeichnet, dass** die einzelnen Markierungen (M1, M2, M3 ...) in einer Markierungsliste eines Speichers (12) zwischengespeichert werden,
die einzelnen Markierungen (M1, M2, M3 ...) miteinander verglichen werden, beim Vergleich eine neue Einzelsummenmarkierung (M1/3) entsteht, die als Einzelsummenmarkierung (M1/3) in die Markierungsliste eingelesen und zwischengespeichert wird,
die Markierungen (M1, M3), die zu Submarkierungen (M1, M3) der Einzelsummenmarkierung (M1/3) werden, aus der Markierungsliste ausgelesen und in einen Submarkierungsspeicher (11.1) eines Markierungsspeichers (11) übernommen werden, die erzeugte Einzelsummenmarkierung (M1/3) mit einer weiteren Markierung (M2 ...) aus der Markierungsliste verglichen wird,
eine aus dem Vergleich resultierende Endsummenmarkierung (Mg) in die Markierungsliste eingetragen wird und
die Submarkierungen (M1/3, M2) der Endsummenmarkierung (Mg) im Submarkierungsspeicher (11.1) hinterlegt werden, wobei die Strukturen der einzelnen Submarkierungen (M1/3, M2, M1, M3 ...) beibehalten werden.

3. Verfahren nach Anspruch 2, **dadurch gekennzeichnet, dass** der Grad der Zusammenfassung der Markierungen (M1, M2, M3 ...) eingestellt werden kann, wodurch statt nur einer Endsummenmarkierung (Mg) mehrere Einzelsummenmarkierungen (M1/3 ...) und/oder einzelne Markierungen (M1, M2, M3 ...) dargestellt werden können.

4. Verfahren nach einem der Ansprüche 1 bis 3, **dadurch gekennzeichnet, dass** aus dem Submarkierungsspeicher (11.1) die Struktur der einzelnen Markierungen (M1, M2, M3 ...) sowie der Einzelsummenmarkierungen (M1/3) entnehmbar ist, die erneut in die Markierungsliste eingetragen werden, wenn statt einer Endsummenmarkierung (Mg) mehrere Markierungen (M1/3, M1, M2, M3 ...) dargestellt werden.

5. Verfahren nach einem oder mehreren der vorgenannten Ansprüche 1 bis 4, **dadurch gekennzeichnet, dass** der Vergleich der zueinander passenden Seiten und Flächen der Markierungen (M1/3, M1, M2, M3 ...) durch einen Vergleich der Koordinaten erfolgt, in denen die Markierungen (M1/3, M1, M2, M3 ...) liegen.

## Claims

1. Radiographic image processing method in which items in a transilluminated object are visualized for an operator on a monitor, marks being set for specific, predefined items, **characterized in that** marks (M1, M2, M3 ...) are automatically combined step by step to form a new mark (M) whenever two marks (M1, M2, M3 ...) match one another, a function being used to test the correspondence between the mutually matching sides of the marks (M1, M2, M3 ...), and the ratio of the joint area of the matching marks to the area of the smaller of the two marks (M1, M2, M3 ...), the result being to create a higher level of clarity by forming a final total mark (Mg) within the radiographic image on the monitor (8).

2. Method according to Claim 1, **characterized in that** the individual marks (M1, M2, M3 ...) are buffered in a mark list of a memory (12), the individual marks (M1, M2, M3 ...) are compared with one another, the comparison yields a new individual total mark (M1/3) which is read into the mark list as individual total mark (M1/3) and buffered, the marks (M1, M3), which become subsidiary marks (M1, M3) of the individual total mark (M1/3) are read out of the mark list and taken over into a subsidiary mark memory (11.1) of a mark memory (11), the individual total mark (M1/3) produced being compared with a further mark (M2 ...) from the mark list, a final total mark (Mg) resulting from the comparison is entered in the mark list, and the subsidiary marks (M1/3, M2) of the final total mark (Mg) are stored in the subsidiary mark memory (11.1), the structures of the individual subsidiary marks (M1/3, M2, M1, M3 ...) being retained.

3. Method according to Claim 2, **characterized in that** the degree of combination of the marks (M1, M2, M3 ...) can be set, as a result of which it is possible to illustrate several individual total marks (M1/3 ...) and/or individual marks (M1, M2, M3 ...) instead of only one final total mark (Mg).

4. Method according to one of Claims 1 to 3, **characterized in that** it is possible to extract from the subsidiary mark memory (11.1) the structure of the individual marks (M1, M2, M3 ...) and of the individual total marks (M1/3), which are re-entered in the mark list when several marks (M1/3, M1, M2, M3 ...) are illustrated instead of a final total mark (Mg).

5. Method according to one or more of the abovenamed Claims 1 to 4, **characterized in that** the comparison of the mutually matching sides and areas of the marks (M1/3, M1, M2, M3 ...) is performed by comparing the coordinates at which the marks (M1/3, M1, M2, M3 ...) are situated.

## Revendications

1. Procédé de traitement d'une image radiographique, dans lequel des objets contenus dans une cible éclairée sont rendus visibles par un utilisateur, sur un écran, des marquages étant placés autour d'objets déterminés, préalablement définis, **caractérisé en ce que** des marquages (M1, M2, M3...) sont automatiquement réunis pas à pas en un nouveau marquage (M), lorsqu'au moins deux marquages (M1, M2, M3...) correspondent l'un à l'autre, la coïncidence des côtés correspondant l'un à l'autre des marquages (M1, M2, M3...) ainsi que le rapport de la surface commune des marquages correspondants (M1, M2, M3...) à la surface des plus petits des deux marquages étant contrôlés par une fonction, ce qui fait qu'il est réalisé une plus grande visibilité par formation d'un marquage total général (Mg) à l'intérieur de l'image radiographique sur le moniteur (8).

2. Procédé selon la revendication 1, **caractérisé en ce que** les différents marquages (M1, M2, M3...) sont mémorisés de manière temporaire dans une liste de marquages d'une mémoire (12), les différents marquages (M1, M2, M3...) sont comparés entre eux, la comparaison donne lieu à un nouveau marquage total individuel (M1/3) qui est enregistré et mémorisé de manière temporaire comme marquage total individuel (M1/3) dans la liste des marquages, les marquages (M1, M3), qui deviennent des sous-marquages (M1, M3) du marquage total individuel (M1/3), sont extraits de la liste des marquages et repris dans une mémoire de sous-marquages (11.1) d'une mémoire des marquages (11), le marquage total individuel (M1/3) produit est comparé à un autre marquage (M2...) de la liste des marquages, un marquage total général (Mg) résultant de la comparaison est enregistré dans la liste des marquages, et les sous-marquages (M1/3, M2) du marquage total général (Mg) sont enregistrés dans la mémoire des sous-marquages (11.1), les structures des différents sous-marquages (M1/3, M2, M1, M3...) étant conservées.

3. Procédé selon la revendication 2, **caractérisé en ce que** le degré de réunion des marquages (M1, M2, M3...) peut être réglé, ce qui fait qu'à la place d'un marquage total général (Mg), on peut représenter plusieurs marquages totaux individuels (M1/3...) et/ou des marquages individuels (M1, M2, M3...).

4. Procédé selon l'une des revendications 1 à 3, **caractérisé en ce que** de la mémoire des sous-marquages (11.1) on peut prélever la structure des différents marquages (M1, M2, M3...) ainsi que des marquages totaux individuels (M1/3) qui sont à nouveau enregistrés dans la liste des marquages, lorsqu'à la place d'un marquage total général (Mg) sont représentés plusieurs marquages (M1/3, M1, M2, M3...).

5. Procédé selon une ou plusieurs des revendications 1 à 4 précédentes, **caractérisé en ce que** la comparaison des côtés et surfaces correspondant les uns aux autres des marquages (M1/3, M1, M2, M3...) s'effectue par une comparaison des coordonnées dans lesquelles se situent les marquages (M1/3, M1, M2, M3...).
